Europäisches Patentamt

European Patent Office

Office européen des brevets

(19)

(11) **EP 0 759 225 B1**

(12) **FASCICULE DE BREVET EUROPEEN**

(45) Date de publication et mention
de la délivrance du brevet:
**11.08.2004 Bulletin 2004/33**

(21) Numéro de dépôt: **96905889.0**

(22) Date de dépôt: **29.02.1996**

(51) Int Cl.⁷: **H02P 21/00**

(86) Numéro de dépôt international:
**PCT/FR1996/000317**

(87) Numéro de publication internationale:
**WO 1996/028884 (19.09.1996 Gazette 1996/42)**

(54) **CORRECTEUR, DISPOSITIF ET PROCEDE POUR LA COMMANDE DU COUPLE ELECTROMAGNETIQUE D'UNE MACHINE ASYNCHRONE**

REGLER,VORRICHTUNG UND VERFAHREN ZUR REGELUNG DES ELEKTROMAGNETISCHEN MOMENTES EINER ASYNCHRONMASCHINE

CORRECTOR, DEVICE AND METHOD FOR CONTROLLING ELECTROMAGNETIC TORQUE IN AN ASYNCHRONOUS MACHINE

(84) Etats contractants désignés:
**BE CH DE ES FR GB IT LI SE**

(30) Priorité: **09.03.1995 FR 9502768**

(43) Date de publication de la demande:
**26.02.1997 Bulletin 1997/09**

(73) Titulaire: **ALCATEL**
**75008 Paris (FR)**

(72) Inventeur: **THOMAS, Jean-Luc**
**F-77810 Thomery (FR)**

(74) Mandataire: **Fournier, Michel Robert Marie et al**
**Compagnie Financière Alcatel**
**Département de Propriété Industrielle,**
**5, rue Noel Pons**
**92734 Nanterre Cedex (FR)**

(56) Documents cités:
**US-A- 5 296 794**

• **JOURNAL DE PHYSIQUE, vol. 2, no. 3, PARIS FR, pages 439-453, XP000331210 X. ROBOAM ET AL: "Controle d'une machine asynchrone par estimation robuste de la vitesse" cité dans la demande**

## Description

La présente invention concerne les dispositifs de contrôle des machines asynchrones, en général, et porte, plus particulièrement, sur un correcteur, un dispositif et un procédé pour la commande du couple électromagnétique d'une machine asynchrone.

La commande de la vitesse d'une machine asynchrone est généralement effectuée par une régulation du flux rotorique ou statorique et par une commande du couple électromagnétique.

Les grandeurs d'alimentation de la machine asynchrone, à savoir les tensions ou courants, sont délivrées par un onduleur à fréquence variable du type source de tension ou source de courant qui génère des signaux de puissance modulés en largeur d'impulsion.

Les valeurs du flux et du couple sont des grandeurs reconstruites par l'intermédiaire de moyens électriques connus grace à la mesure de la tension et du courant statoriques.

La recherche dans le domaine des dispositifs de contrôle des machines asynchrones a longtemps portée sur l'augmentation des performances dynamiques de ces dispositifs de contrôle.

Les performances de ces dispositifs de contrôle, généralement définies par le temps de réponse du couple électromagnétique, sont désormais jugées satisfaisantes pour la plupart des applications industrielles et ferroviaires.

La notion de robustesse apparaît alors comme un critère supplémentaire des performances des dispositifs de contrôle des machines asynchrones.

Par robustesse d'une structure de commande il faut entendre le potentiel de cette structure de commande à rester insensible à des perturbations, par exemple dues aux erreurs de modèles ou aux variations paramétriques.

Une des solutions techniques connues bien adaptées pour résoudre le problème de la robustesse des dispositifs de commande du couple électromagnétique d'une machine asynchrone sont basées sur une modélisation aux perturbations singulières du modèle de Park, d'une part, et sur l'orientation initiale du référentiel tournant sur le courant statorique, d'autre part.

Un inconvénient de cette solution est que la robustesse des dispositifs de commande du couple électromagnétique de la machine asynchrone est privilégiée au détriment des performances, du fait de l'utilisation de lois de commande linéaires.

Par ailleurs, lorsque les lois de commande utilisées sont purement non linéaires, la robustesse de ces dispositifs de commande n'est pas assurée.

La thèse présentée par Xavier ROBOAM à l'Institut National Polytechnique de Toulouse, "Variateur de vitesse pour machine asynchrone", thèse INPT publiée en 1991, porte sur le développement de lois de commande robustes et sur le contrôle de la vitesse sans capteur mécanique.

Le variateur de vitesse pour machine asynchrone décrit fait appel à l'implantation de lois de commande numériques robustes ainsi qu'à la reconstitution des grandeurs fondamentales non mesurées, à savoir: le flux statorique, la vitesse et le couple.

Les inconvénients du variateur de vitesse pour machine asynchrone décrit dans ce document sont:

- un contrôle linéaire du module du flux statorique dont l'ajustement est empirique,
- un contrôle linéaire du couple électromagnétique valable essentiellement pour les faibles valeurs de la pulsation des courants rotoriques et
- une dynamique de réponse en boucle fermée de la boucle de couple insuffisante.

Le correcteur et le dispositif pour la commande du couple électromagnétique d'une machine asynchrone de l'invention se distingue du variateur de vitesse décrit dans ce document en ce que:

- la grandeur flux rotorique remplace la grandeur flux statorique ce qui permet une commande non linéaire du type linéarisation entrée-sortie afin de garantir des performances dynamiques maximales,
- la robustesse de la régulation de flux est assurée par un correcteur du type proportionnel intégral "sans zéro" placé en amont de la loi de commande non linéaire,
- la commande du couple électromagnétique est réalisée par l'association d'un correcteur linéaire afin d'obtenir le meilleur compromis performance/robustesse sur le contrôle du couple, et
- la singularité de flux lors du démarrage, à savoir l'augmentation vers l'infini du courant au démarrage, est levée au moyen d'une limitation adaptée.

Le document "Contrôle d'une machine asynchrone par estimation robuste de la vitesse", Journal de Physique, Mars 1992, pages 439 à 453 de Xavier ROBOAM et al., complète le document cité précédemment et donne les résultats obtenus en fonction des perturbations auxquelles le variateur est soumis.

La solution proposée repose sur la régulation du flux rotorique par une loi dynamique ne prenant pas en compte la robustesse paramétrique, et notamment la robustesse face à une variation de l'inductance mutuelle $x_m$.

Les résultats obtenus montrent essentiellement les bonnes performances de reconstruction de la vitesse et du flux.

Cette solution n'aborde toutefois pas les problèmes de performance dynamique et de robustesse des contrôles du couple et du flux.

Ces documents sont basés sur l'initialisation du référentiel tournant, à savoir: le repère (d,q), sur le vecteur courant statorique de la machine asynchrone.

Il résulte d'une telle initialisation et du fait que l'axe d et l'axe q du repère diphasé tournant sont en quadrature, que:

- la valeur de la composante sur l'axe q du courant statorique notée $i_{sq}$ est nulle, $i_{sq}=0$, ainsi que sa dérivée temporelle, $di_{sq}/dt=0$, et
- la valeur de la composante sur l'axe d du courant statorique notée $i_{sd}$ est égale au module du courant statorique $i_s$.

Il découle de ce qui précède l'introduction de la robustesse du fait que le référentiel est orienté sur une mesure fiable et précise du courant statorique $i_s$, ce qui n'est pas le cas lorsque l'axe d du repère tournant est orienté initialement sur l'axe du flux rotorique ou statorique de la machine asynchrone, ces grandeurs n'étant pas des grandeurs mesurées contrairement au courant statorique.

Aussi un but de l'invention est-il un correcteur et un dispositif pour la commande de la vitesse d'une machine asynchrone insensible aux perturbations, principalement dues aux incertitudes de modélisation et aux variations paramétriques.

En d'autres termes, un but de l'invention est d'augmenter la robustesse des lois de commande des dispositifs de contrôle de la vitesse des machines asynchrones, en minimisant la dégradation des performances dynamiques.

Il découle de ce qui précède qu'un but de l'invention est de trouver le meilleur compromis entre performance et robustesse lors de la régulation de flux et de la commande du couple électromagnétique de la machine asynchrone.

Un autre but de l'invention est de réaliser un dispositif de commande du couple électromagnétique d'une machine asynchrone dans lequel le réglage du correcteur de flux ne se fait pas par le biais d'une méthode empirique.

conformément à l'invention, le correcteur pour la commande du couple électromagnétique d'une machine asynchrone par une régulation du flux magnétique $\phi$ et par une commande du couple électromagnétique $C_m$ se caractérise par:

- un circuit de régulation du flux magnétique rotorique $\phi_r$, à commande non linéaire utilisant la linéarisation d'entrée-sortie par bouclage statique, définie par l'équation

$$i_{sd}^* = \frac{1}{x_m} \frac{\phi_r^{2*}}{\phi_{rd}}$$

dans laquelle,

$i_{sd}^*$  est la consigne du courant statorique dans l'axe d,
$\phi_r^{2*}$  est la consigne du module du flux rotorique,
$\phi_{rd}$  est la composante d du flux rotorique,
$x_m$  est l'inductance mutuelle (ou magnétisante),

et dont la sortie contrôle la composante d du courant statorique $i_s^*$,
- un premier correcteur linéaire du type proportionnel intégral dont la sortie v est l'entrée dudit circuit de régulation,
- un deuxième correcteur linéaire du type proportionnel intégral dont la sortie contrôle la pulsation des courants rotoriques $\omega_{s1}$.

Le correcteur pour la commande du couple électromagnétique d'une machine asynchrone par une régulation du flux magnétique $\phi$ et par une commande du couple électromagnétique $C_m$ de l'invention satisfait également à l'une des caractéristiques suivantes:

- le deuxième correcteur est complété par un circuit à commande non linéarisante défini par l'équation

$$\omega_{s!} = \left\{ \frac{\overset{\bullet}{A_c}}{B_c} \left( \frac{1}{\theta} \right) - \frac{A_c}{B_c} \right\} C_m + \frac{\overset{\bullet}{B_c}}{B_c} \left( \frac{1}{\theta} \right) v_{cm}$$

$$\theta = \frac{\phi_r^{2*}}{\phi_{rd}^2}, \ A_c^* = -\frac{1}{\tau_r}, \ B_c^* = \frac{1}{\tau_r}$$

avec

$$A_c = -\frac{1}{\tau_r}, \ B_c = \frac{\omega_{sN} \ \phi_r^{2*}}{x_r}$$

dans laquelle,

$\theta$      est le paramètre caractérisant le point de fonctionnement en couple,

$v_{cm}$      est l'entrée dudit correcteur,

$\tau_r$      est la constante de temps rotorique,

$\omega_{sN}$      est la pulsation statorique nominale,

$x_r$      est la réactance rotorique,

et dont l'entrée est définie par la sortie $v_{cm}$ dudit deuxième correcteur et dont la sortie contrôle la pulsation des courants rotoriques $\omega_{s1}$,

- le circuit de régulation du flux est défini par l'équation

$$i_{sd}^* = \frac{1}{x_m} \ \frac{\phi_{r_\wedge}^{2*}}{sat(\phi_{rd})}$$

dans laquelle la fonction $sat(\hat{\phi}_{rd})$ est une fonction non linéaire de limitation définie par le système d'équations:

$$sat(\hat{\phi}_{rd}) = \begin{cases} \hat{\phi}_{rd} & si \ \hat{\phi}_{rd} > \Phi_{rd_{min}} \\ \Phi_{rd_{min}} & si \ \hat{\phi}_{rd} \leq \Phi_{rd_{min}} \end{cases}$$

avec

$$\Phi_{rd_{min}} = \frac{1}{x_m} \ \frac{\Phi_{rN}^2}{I_{s_{max}}}$$

dans lequel,

$\Phi_{rN}^2$      est le flux rotorique nominal,

$I_{s_{max}}$      est le courant maximal admissible par le convertisseur et/ou la machine asynchrone,

- le circuit de régulation du flux est défini par l'équation

$$i^{*}_{sd} = \frac{1}{x_{m}(\phi^{2*}_{r}, \hat{\imath}_{mr})} \frac{\phi^{2*}_{r}}{sat(\phi_{rd})}$$

dans laquelle,

$\hat{\imath}_{mr}$ est l'estimation du courant magnétisant, et

$x_{m}(\Phi^{2*}_{r}, \hat{\imath}_{mr})$ est une fonction résultant de l'identification de la caractéristique statique de magnétisation,

- la sortie des premier et deuxième correcteurs est la différence entre une action proportionnelle et une action intégrale, ladite action intégrale résultant de la différence pondérée par un gain $k_i$, respectivement $k_{ic}$, entre la consigne $\phi^{2*}_{r}$, respectivement $C^{*}_{m}$, et l'estimation du flux $\phi^{2}_{r}$, respectivement de l'estimation du couple $C_m$, et ladite action proportionnelle résultant de la pondération par un gain $k_p$, respectivement $k_{pc}$, de l'estimation du flux $\phi^{2}_{r}$, respectivement de l'estimation du couple $C_m$.

Conformément à l'invention, le dispositif de commande du couple électromagnétique d'une machine asynchrone par une régulation du flux magnétique $\phi$ et par une commande du couple électromagnétique $C_m$, le dispositif étant constitué de moyens de commande associés à une source d'alimentation et d'un correcteur $K_{ext}$, est caractérisé en ce que le correcteur $K_{ext}$ est défini tel qu'indiqué précédemment.

Dans un tel dispositif, la machine asynchrone étant commandée au moyen d'une alimentation en tension, l'alimentation en tension est bouclée en courant par un troisième correcteur $K_{int}$ disposé en cascade avec le correcteur $K_{ext}$.

Conformément à l'invention, le procédé de commande du couple électromagnétique d'une machine asynchrone par une régulation du flux magnétique $\phi$ et par une commande du couple électromagnétique $C_m$, au moyen d'un dispositif constitué de moyens de commande associés à une source d'alimentation et d'un correcteur $K_{ext}$ défini tel qu'indiqué précédemment, est caractérisé en ce qu'il comporte les étapes consistant à:

- effectuer une régulation du flux magnétique rotorique $\phi_r$ au moyen d'un circuit de régulation à commande non linéaire utilisant la linéarisation d'entrée-sortie par bouclage statique,
- effectuer une action intégrale puis proportionnelle de manière à obtenir la variable v d'entrée dudit circuit de régulation, et
- effectuer une action intégrale puis proportionnelle de manière à contrôler la pulsation des courants rotoriques $\omega_{s1}$.

Le procédé de l'invention est susceptible de comporter l'une des étapes suivantes consistant à:

- compléter l'action intégrale puis proportionnelle pour contrôler la pulsation des courants rotoriques $\omega_{s1}$ par une loi de commande linéarisante de manière à s'affranchir des variations du point de fonctionnement de la machine asynchrone,
- fixer une valeur de courant maximum lors du démarrage de la machine asynchrone ou lors du fonctionnement en régime défluxé,
- adapter la réactance mutuelle statique $x_m$ de manière à s'affranchir de sa variation lors du fonctionnement de la machine asynchrone en régime défluxé.

Un avantage du correcteur, du dispositif et du procédé de commande du couple électromagnétique d'une machine asynchrone de l'invention est de proposer un meilleur compromis entre les performances dynamiques et la robustesse de la régulation de flux et de la commande du couple électromagnétique.

Cet avantage est dû, d'une part, au fait que les performances dynamiques sont obtenues par l'utilisation de lois de commande non-linéaires et, d'autre part, au fait que la robustesse résulte de la mise en oeuvre de correcteurs du type Proportionnel Intégral "sans zéro" disposés en amont des lois de commande non-linéaires.

Un autre avantage du correcteur, du dispositif et du procédé de commande du couple électromagnétique d'une machine asynchrone de l'invention est qu'ils permettent de s'affranchir de façon implicite de la singularité de flux lors du démarrage de la machine asynchrone.

D'autres buts, caractéristiques et avantages de l'invention apparaîtront à la lecture de la description des modes de réalisation préférés du correcteur et du dispositif pour la commande du couple électromagnétique d'une machine asynchrone, description faite en liaison avec les dessins dans lesquels:

- la figure 1 représente un schéma d'ensemble d'une structure connue d'un dispositif de commande du couple électromagnétique d'une machine asynchrone comprenant un ensemble $\Sigma_L$, basé sur un actionneur de courant I$_d$, et un correcteur K$_{ext}$, objet de l'invention,

- la figure 2 représente un schéma d'ensemble d'une structure connue d'un dispositif de commande du couple électromagnétique comprenant un ensemble $\Sigma_L$, basé sur un actionneur de tension U$_d$, et un correcteur K$_{ext}$, objet de l'invention,
- la figure 3 représente un schéma illustrant un premier mode de réalisation préféré du correcteur pour la commande du couple électromagnétique d'une machine asynchrone conforme à l'invention comportant une boucle de correction du flux du type globalement non linéaire et une boucle de correction du couple du type linéaire,
- la figure 4 représente un schéma illustrant un deuxième mode de réalisation préféré du correcteur pour la commande du couple électromagnétique d'une machine asynchrone conforme à l'invention comportant une boucle de correction du flux et une boucle de correction du couple, toutes deux du type globalement non linéaire.

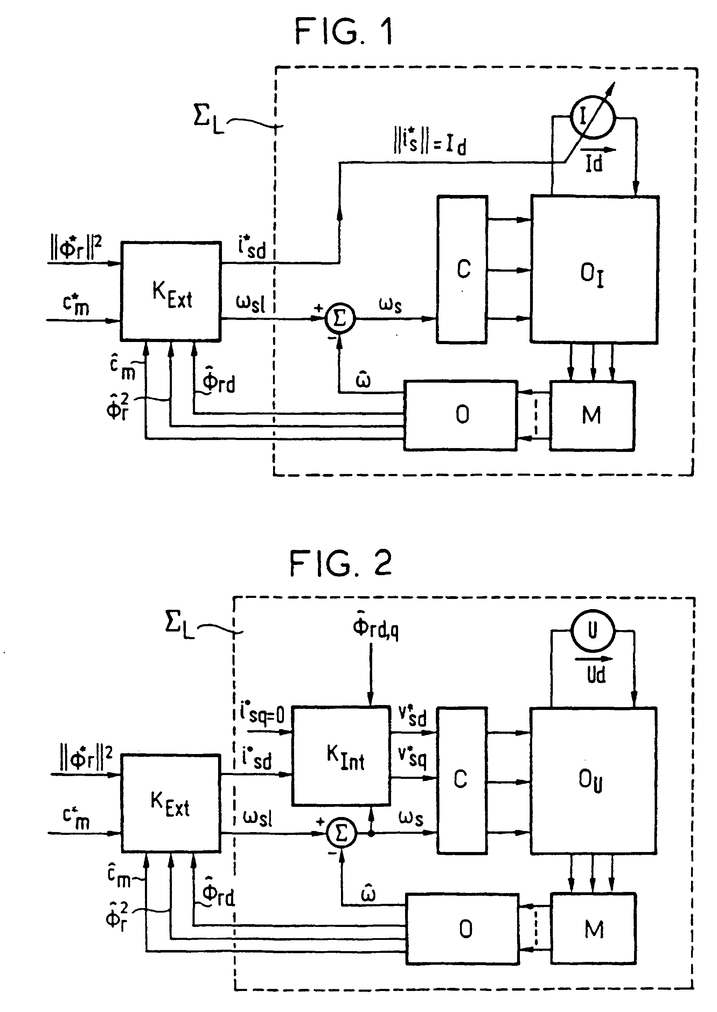

La figure 1 représente un schéma d'ensemble d'une structure connue d'un dispositif de commande du couple électromagnétique d'une machine asynchrone comprenant un ensemble $\Sigma_L$, basé sur un actionneur de courant I$_d$, et un correcteur K$_{ext}$ objet de l'invention.

Conformément au schéma d'ensemble représenté sur cette figure 1, l'ensemble $\Sigma_L$, connue de l'art antérieur, comporte un moteur asynchrone M du type triphasé alimenté par un onduleur de courant O$_I$ auquel est associé un moyen de commande C à modulation de largeur d'impulsions et une source de courant I$_d$ commandée.

Les valeurs du flux et du couple de la machine asynchrone sont reconstituées, selon une méthode connue de l'art antérieur, au moyen d'un observateur O.

Ces valeurs reconstituées du flux et du couple de la machine asynchrone sont envoyées sur le correcteur K$_{ext}$, objet de l'invention, lequel fourni des valeurs de commande de la pulsation des courants rotoriques fonction des valeurs de consigne de flux et de couple.

La figure 2 représente un schéma d'ensemble d'une structure connue d'un dispositif de commande du couple électromagnétique comprenant un ensemble $\Sigma_L$, basé sur un actionneur de tension U$_d$, et un correcteur K$_{ext}$ objet de l'invention.

Le schéma d'ensemble représenté à la figure 2 diffère du schéma d'ensemble représenté à la figure 1 en ce que la machine asynchrone M est alimenté au moyen d'un onduleur de tension O$_U$ commandée au moyen d'une alimentation en tension U$_d$ bouclée en courant par un correcteur K$_{int}$ disposé en cascade avec le correcteur K$_{ext}$.

Le correcteur pour la commande du couple électromagnétique d'une machine asynchrone conforme à l'invention est basé sur l'initialisation de l'axe d du repère diphasé tournant sur le vecteur courant statorique de la machine asynchrone.

Comme indiqué précédemment, il résulte d'une telle initialisation et du fait que l'axe d et l'axe q du repère diphasé tournant sont en quadrature, que la valeur de la composante sur l'axe q du courant statorique notée i$_{sq}$ est nulle, i$_{sq}$=0, ainsi que sa dérivée temporelle, di$_{sq}$/dt=0.

En introduisant le fait que la valeur de la composante sur l'axe q du courant statorique i$_s$ est nulle dans les équations en régime transitoire de la machine asynchrone, on obtient une loi de commande linéarisante pour la commande du module du flux rotorique donnée par l'expression en valeurs réduites suivante:

$$i_{sd}^{*} = \frac{1}{x_m} \frac{\phi_r^{2*}}{\phi_{rd}}$$

dans laquelle

$i_{sd}^{*}$   est la consigne du courant statorique dans l'axer d,

$\phi_r^{2*}$   est la consigne du module du flux rotorique,

$\phi_{rd}$   est la composante d du flux rotorique, et

$x_m$   est l'inductance mutuelle (ou magnétisante).

Connaissant la régulation souhaitée à appliquer au flux rotorique, il importe de déterminer la régulation à appliquer au couple de la machine asynchrone.

L'expression de la dynamique de couple tenant compte de la régulation du flux rotorique est alors définie comme suit:

$$\frac{dC_m}{dt} = -\frac{1}{\tau_r}\left\{\frac{\phi_r^{2*}}{\phi_{rd}^2}\right\}C_m + \frac{\omega_{SN}\phi_r^{2*}}{x_r}\left\{\frac{\phi_r^{2*}}{\phi_{rd}^2}\right\}\omega_{sl}$$

dans laquelle,

$C_m$ est le couple électromagnétique,
$\omega_{SN}$ est la pulsation statorique nominale,
$\omega_{SL}$ est la pulsation des courants rotoriques,
$\tau_r$ est la constante de temps rotorique, et
$x_r$ est la réactance rotorique.

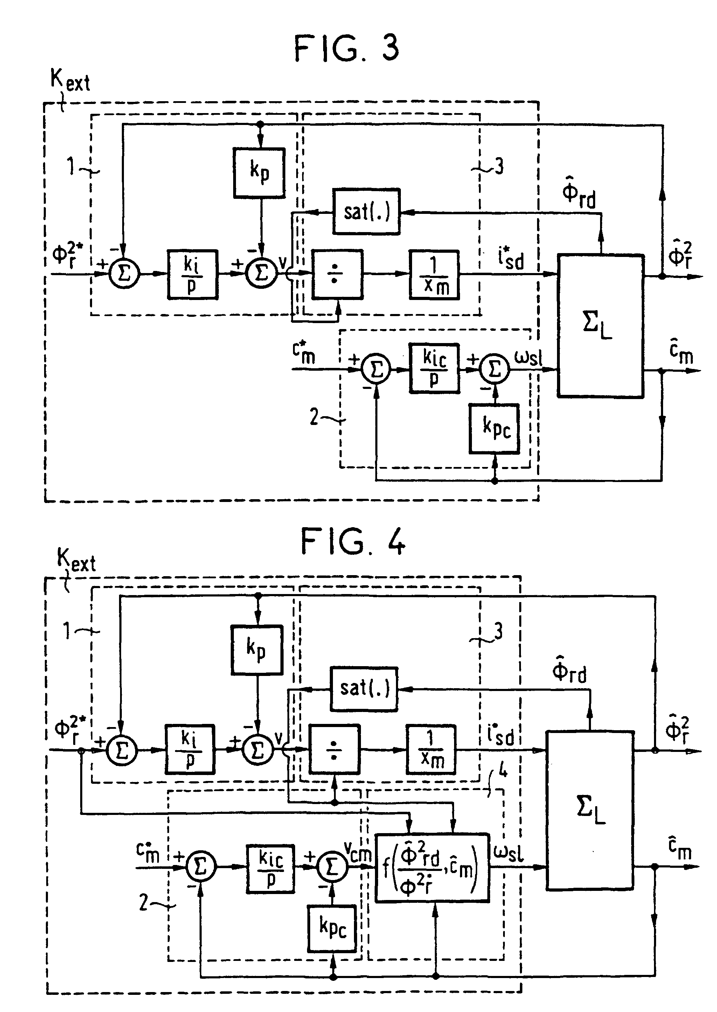

La figure 3 représente un schéma illustrant un premier mode de réalisation préféré du correcteur pour la commande du couple électromagnétique d'une machine asynchrone conforme à l'invention comportant une boucle de correction du flux du type non linéaire et une boucle de correction du couple du type linéaire.

La boucle de correction du flux se compose d'un circuit de régulation 3 du flux magnétique rotorique $\phi_r$, à commande non linéaire utilisant la linéarisation d'entrée-sortie par bouclage statique, définie par l'équation

$$i_{sd}^* = \frac{1}{x_m}\frac{\phi_r^{2*}}{\phi_{rd}}$$

dans laquelle,

$i_{sd}^*$ est la consigne du courant statorique dans l'axe d,
$\phi_r^{2*}$ est la consigne du module du flux rotorique,
$\phi_{rd}$ est la composante d du flux rotorique,
$x_m$ est l'inductance mutuelle (ou magnétisante),

et dont la sortie contrôle la composante d du courant statorique $i_s^*$.

Cette boucle de correction du flux peut de plus comprendre un premier correcteur 1 linéaire du type proportionnel intégral dont la sortie v est l'entrée du circuit de régulation 3.

Comme représenté à la figure 3, le premier correcteur 1 linéaire du type proportionnel intégral est de préférence un correcteur linéaire de type proportionnel intégral "sans zéro".

Un correcteur de type proportionnel intégral "sans zéro" est un correcteur de type proportionnel intégral qui garanti une fonction de transfert en boucle fermée vis-à-vis de la consigne qui ne présente pas de dépassement sur une réponse indicielle.

La boucle de correction du couple se compose d'un deuxième correcteur 2 linéaire du type proportionnel intégral, de préférence "sans zéro", dont la sortie contrôle-la pulsation des courants rotoriques $\omega_{s1}$.

La figure 4 représente un schéma illustrant un deuxième mode de réalisation préféré du correcteur pour la commande du couple électromagnétique d'une machine asynchrone conforme à l'invention comportant une boucle de correction du flux et une boucle de correction du couple, toutes deux du type globalement non linéaire.

Le schéma illustrant ce deuxième mode de réalisation préféré du correcteur pour la commande du couple électromagnétique d'une machine asynchrone conforme à l'invention diffère du schéma illustrant le premier mode de réalisation préféré en ce que le deuxième correcteur 2 est complété par un circuit à commande non linéarisante 4.

Ce circuit à commande non linéarisante 4 est défini par l'équation

$$\omega_{sl} = \left\{\frac{A_c^\bullet}{B_c}\left(\frac{1}{\theta}\right) - \frac{A_c}{B_c}\right\}C_m + \frac{B_c^\bullet}{B_c}\left(\frac{1}{\theta}\right)v_{cm}$$

$$\theta = \frac{\phi_r^{2*}}{\phi_{rd}^2}, \ A_c^* = -\frac{1}{\tau_r}, \ B_c^* = \frac{1}{\tau_r}$$

avec

$$A_c = -\frac{1}{\tau_r}, \quad B_c = \frac{\omega_{sN}\,\phi_r^{2*}}{x_r}$$

dans laquelle,

$\theta$      est le paramètre caractérisant le point de fonctionnement en couple,
$v_{cm}$      est l'entrée dudit correcteur,
$\tau_r$      est la constante de temps rotorique,
$\omega_{SN}$      est la pulsation statorique nominale,
$x_r$      est la réactance rotorique,

et dont l'entrée est définie par la sortie $v_{cm}$ dudit deuxième correcteur et dont la sortie contrôle la pulsation des courants rotoriques $\omega_{s1}$.

Il découle de ce qui précède que c'est le mérite de la demanderesse que de proposer un correcteur pour la commande du couple électromagnétique d'une machine asynchrone dans lequel la commande du module du flux rotorique est effectuée par une action non linéaire sur la composante d du courant statorique et dans lequel la commande du couple est effectuée par un correcteur du type proportionnel intégral "sans zéro" par action sur la pulsation des courants rotoriques $\omega_{s1}$, combinée à une loi de commande linéarisante.

Quel que soit le mode de réalisation considéré, le circuit de régulation du flux 3 est avantageusement défini par l'équation

$$i_{sd}^* = \frac{1}{x_m}\,\frac{\phi_{r\Lambda}^{2*}}{\mathrm{sat}(\phi_{rd})}$$

dans laquelle la fonction $\mathrm{sat}(\hat{\phi}_{rd})$ est une fonction non linéaire de limitation définie par le système d'équations:

$$\mathrm{sat}(\hat{\phi}_{rd}) = \begin{cases} \hat{\phi}_{rd} & \text{si } \hat{\phi}_{rd} > \Phi_{rd_{min}} \\[2mm] \Phi_{rd_{min}} & \text{si } \hat{\phi}_{rd} \leq \Phi_{rd_{min}} \end{cases}$$

avec

$$\Phi_{rd_{min}} = \frac{1}{x_m}\,\frac{\Phi_{rN}^2}{I_{s_{max}}}$$

dans lequel,

$\Phi_{rN}^2$      est le flux rotorique nominal,
$I_{s_{max}}$      est le courant maximal admissible par le convertisseur et/ou la machine asynchrone.

Le circuit de régulation du flux 3 peut également être défini par l'équation

$$i_{sd}^* = \frac{1}{x_m(\phi_r^{2*}, \hat{\imath}_{mr})}\,\frac{\phi_r^{2*}}{\mathrm{sat}(\phi_{rd})}$$

dans laquelle,

$\hat{\imath}_{mr}$      est l'estimation du courant magnétisant, et

$x_m (\phi_r^{2*}, \hat{i}_{mr})$   est une fonction résultant de l'identification de la caractéristique statique de magnétisation.

La sortie des premier 1 et deuxième 2 correcteurs, est de préférence, la différence entre une action proportionnelle et une action intégrale, l'action intégrale résultant de la différence pondérée par un gain $k_i$, respectivement $k_{ic}$, entre la consigne $\phi_r^{2*}$, respectivement $C_m^*$, et l'estimation du flux $\phi_r^2$, respectivement de l'estimation du couple $C_m$, et l'action proportionnelle résultant de la pondération par un gain $k_p$, respectivement $k_{pc}$, de l'estimation du flux $\phi_r^2$, respectivement de l'estimation du couple $C_m$.

Comme indiqué précédemment, la présente invention porte également sur un dispositif de commande du couple électromagnétique d'une machine asynchrone par une régulation du flux magnétique $\phi$ et par une commande du couple électromagnétique $C_m$, le dispositif étant constitué de moyens de commande associés à une source d'alimentation et d'un correcteur $K_{ext}$, le correcteur $K_{ext}$ étant défini tel qu'indiqué précédemment.

Enfin, l'invention porte également sur un procédé pour la commande du couple électromagnétique d'une machine asynchrone par une régulation du flux magnétique $\phi$ et par une commande du couple électromagnétique $C_m$, au moyen d'un dispositif constitué de moyens de commande associés à une source d'alimentation et d'un correcteur $K_{ext}$ défini tel qu'indiqué précédemment.

Ce procédé comporte les étapes consistant à:

-   effectuer une régulation du flux magnétique rotorique $\phi_r$ au moyen d'un circuit de régulation à commande non linéaire utilisant la linéarisation d'entrée-sortie par bouclage statique,
-   effectuer une action intégrale puis proportionnelle de manière à obtenir la variable v d'entrée dudit circuit de régulation, et
-   effectuer une action intégrale puis proportionnelle de manière à contrôler la pulsation des courants rotoriques $\omega_{s1}$.

Ce procédé est susceptible de comporter une étape supplémentaire consistant à compléter l'action intégrale puis proportionnelle pour contrôler la pulsation des courants rotoriques $\omega_{s1}$ par une loi de commande linéarisante de manière à s'affranchir des variations du point de fonctionnement de la machine asynchrone.

Le procédé est également susceptible de comporter une étape consistant à fixer une valeur de courant maximum lors du démarrage de la machine asynchrone ou lors du fonctionnement en régime défluxé.

Le procédé est également susceptible de comporter une étape consistant à adapter la réactance mutuelle statique $x_m$ de manière à s'affranchir de sa variation lors du fonctionnement de la machine asynchrone en régime défluxé.

## Revendications

1.   correcteur pour la commande du couple électromagnétique d'une machine asynchrone par une régulation du flux magnétique $\phi$ et par une commande du couple électromagnétique $C_m$, **caractérisé par**:

   -   un circuit de régulation (3) du flux magnétique rotorique $\phi_r$, à commande non linéaire utilisant la linéarisation d'entrée-sortie par bouclage statique, définie par l'équation

$$i_{sd}^* = \frac{1}{x_m} \frac{\phi_r^{2*}}{\phi_{rd}}$$

   dans laquelle,

   $i_{sd}^*$   est la consigne du courant statorique dans l'axe d,
   $\phi_r^{2*}$   est la consigne du module du flux rotorique,
   $\phi_{rd}$   est la composante d du flux rotorique,
   $x_m$   est l'inductance mutuelle (ou magnétisante),

   et dont la sortie contrôle la composante d du courant statorique $i_s^*$,
   -   un premier correcteur (1) linéaire du type proportionnel intégral dont la sortie v est l'entrée dudit circuit de régulation,
   -   un deuxième correcteur (2) linéaire du type proportionnel intégral dont la sortie contrôle la pulsation des courants rotoriques $\omega_{s1}$.

**2.** Correcteur selon la revendication 1, dans lequel ledit deuxième correcteur est complété par un circuit à commande non linéarisante (4) défini par l'équation

$$\omega_{sl} = \left\{ \frac{\dot{A_c}}{B_c}\left(\frac{1}{\theta}\right) - \frac{A_c}{B_c} \right\} C_m + \frac{\dot{B_c}}{B_c}\left(\frac{1}{\theta}\right) v_{cm}$$

$$\theta = \frac{\phi_r^{2*}}{\phi_{rd}^2}, \quad A_c^* = -\frac{1}{\tau_r}, \quad B_c^* = \frac{1}{\tau_r}$$

avec

$$A_c = -\frac{1}{\tau_r}, \quad B_c = \frac{\omega_{sN}\,\phi_r^{2*}}{x_r}$$

dans laquelle,

$\theta$ est le paramètre caractérisant le point de fonctionnement en couple,
$v_{cm}$ est l'entrée dudit correcteur,
$\tau_r$ est la constante de temps rotorique,
$\omega_{sN}$ est la pulsation statorique nominale,
$x_r$ est la réactance rotorique,

et dont l'entrée est définie par la sortie $v_{cm}$ dudit deuxième correcteur et dont la sortie contrôle la pulsation des courants rotoriques $\omega_{s1}$.

**3.** Correcteur selon l'une quelconque des revendications 1 et 2, dans lequel ledit circuit de régulation du flux est défini par l'équation

$$i_{sd}^* = \frac{1}{x_m} \frac{\phi_{r\wedge}^{2*}}{sat(\phi_{rd})}$$

dans laquelle la fonction $sat(\hat{\phi}_{rd})$ est une fonction non linéaire de limitation définie par le système d'équations:

$$sat(\hat{\phi}_{rd}) = \begin{cases} \hat{\phi}_{rd} & si\ \hat{\phi}_{rd} > \Phi_{rd_{min}} \\ \Phi_{rd_{min}} & si\ \hat{\phi}_{rd} \leq \Phi_{rd_{min}} \end{cases}$$

$$\Phi_{rd_{min}} = \frac{1}{x_m} \frac{\Phi_{rN}^2}{I_{s_{max}}}$$

dans lequel,

$\Phi_{rN}^2$ est le flux rotorique nominal,
$I_{s_{max}}$ est le courant maximal admissible par le convertisseur et/ou la machine asynchrone.

**4.** Correcteur selon l'une quelconque des revendications 1 et 2, dans lequel ledit circuit de régulation du flux est défini

par l'équation

$$i_{sd}^* = \frac{1}{x_m(\phi_r^{2*}, \hat{\imath}_{mr})} \frac{\phi_r^{2*}}{sat(\phi_{rd})}$$

dans laquelle,

$\hat{\imath}_{mr}$ est l'estimation du courant magnétisant, et

$x_m(\Phi_r^{2*}, \hat{\imath}_{mr})$ est une fonction résultant de l'identification de la caractéristique statique de magnétisation.

5. Correcteur selon l'une quelconque des revendications 1 à 4, dans lequel la sortie des premier et deuxième correcteurs est la différence entre une action proportionnelle et une action intégrale, ladite action intégrale résultant de la différence pondérée par un gain $k_i$, respectivement $k_{ic}$, entre la consigne $\phi_r^{2*}$, respectivement $C_m$, et l'estimation du flux $\phi_r^2$, respectivement de l'estimation du couple $C_m$, et ladite action proportionnelle résultant de la pondération par un gain $k_p$, respectivement $k_{pc}$, de l'estimation du flux $\phi_r^2$ respectivement de l'estimation du couple $C_m$.

6. Dispositif de commande du couple électromagnétique d'une machine asynchrone par une régulation du flux magnétique $\phi$ et par une commande du couple électromagnétique $C_m$, ledit dispositif étant constitué de moyens de commande associés à une source d'alimentation et d'un correcteur $K_{ext}$, ledit dispositif étant **caractérisé en ce que** ledit correcteur $K_{ext}$ est défini par l'une quelconque des revendications précédentes.

7. Dispositif selon la revendication 6, dans lequel, ladite machine asynchrone étant commandée au moyen d'une alimentation en tension, ladite alimentation en tension est bouclée en courant par un troisième correcteur $K_{int}$ disposé en cascade avec ledit correcteur $K_{ext}$.

8. Procédé de commande du couple électromagnétique d'une machine asynchrone par une régulation du flux magnétique $\phi$ et par une commande du couple électromagnétique $C_m$, au moyen d'un dispositif constitué de moyens de commande associés à une source d'alimentation et d'un correcteur $K_{ext}$ défini par l'une quelconque des revendications précédentes, ledit procédé étant **caractérisé en ce qu'**il comporte les étapes consistant à:

   - effectuer une régulation du flux magnétique rotorique $\phi_r$ au moyen d'un circuit de régulation à commande non linéaire utilisant la linéarisation d'entrée-sortie par bouclage statique,
   - effectuer une action intégrale puis proportionnelle de manière à obtenir la variable v d'entrée dudit circuit de régulation, et
   - effectuer une action intégrale puis proportionnelle de manière à contrôler la pulsation des courants rotoriques $\omega_{s1}$.

9. Procédé selon la revendication B, comportant une étape supplémentaire consistant à compléter ladite action intégrale puis proportionnelle pour contrôler ladite pulsation des courants rotoriques $\omega_{s1}$ par une loi de commande linéarisante de manière à s'affranchir des variations du point de fonctionnement de ladite machine asynchrone.

10. Procédé selon l'une quelconque des revendications 8 et 9, comportant une étape consistant à fixer une valeur de courant maximum lors du démarrage de ladite machine asynchrone ou lors du fonctionnement en régime défluxé.

11. Procédé selon l'une quelconque des revendications 8 et 9, comportant une étape consistant à adapter la réactance mutuelle statique $x_m$ de manière à s'affranchir de sa variation lors du fonctionnement de ladite machine asynchrone en régime défluxé.

**Patentansprüche**

1. Regler zur Regelung des elektromagnetischen Moments einer Asynchronmaschine durch Regelung des magnetischen Flusses $\Phi$ und durch Regelung des elektromagnetischen Moments $C_m$, **gekennzeichnet durch**:

   - einen Regelkreis (3) für den magnetischen Rotorfluss $\Phi_r$ mit nicht linearer Steuerung, in dem die Eingangs-Ausgangs-Linearisierung **durch** statische Rückführung eingesetzt wird, definiert **durch** die Gleichung

$$i^*_{sd} = \frac{1}{x_m} \frac{\Phi^{2*}_r}{\Phi_{rd}}$$

wobei:

$i^*_{sd}$  der Einstellwert für den Statorstrom in der Achse d ist,
$\Phi^{2*}_r$  der Einstellwert für das Modul des Rotorflusses ist,
$\Phi_{rd}$  die Komponente d des Rotorstroms ist,
$x_m$  die gegenseitige (oder magnetisierende) Induktanz ist, und dessen Ausgang die Komponente d des Statorstrom $i^*_s$ steuert,

- einen ersten linearen Proportional-Integralregler (1), dessen Ausgang v der Eingang des genannten Regelkreises ist,
- einen zweiten linearen Proportional-Integralregler (2), dessen Ausgang die Kreisfrequenz der Rotorströme $\omega_{s1}$ steuert.

2. Regler gemäß Anspruch 1, bei dem der genannte zweite Regler ergänzt wird durch einen Kreis mit nicht linearisierender Regelung (4), der durch die folgende Gleichung definiert wird:

$$\omega_{s1} = \left\{ \frac{A^*_c \ (1)}{B_c \ (\theta)} - \frac{A_c}{B_c} \right\} C_m + \frac{B^*_c \ (1)}{B_c \ (\theta)} v_{cm}$$

$$\theta = \frac{\Phi^{2*}_r}{\Phi^2_{rd}}, \ A^*_c = -\frac{1}{\tau_r}, \ B^*_c = \frac{1}{\tau_r}$$

wobei

$$A_c = -\frac{1}{\tau_r}, \ B_c = \omega_{sN} \frac{\Phi^{2*}_r}{x_r}$$

in der
$\theta$ der Parameter ist, der den Arbeitspunkt des Moments kennzeichnet,
$V_{cm}$ der Eingang des beschriebenen Reglers ist,
$\tau_r$ die Konstante für die Rotorzeit ist,
$\omega_{sn}$ die Nominalkreisfrequenz des Stators ist,
$x_r$ die Rotorreaktanz ist,
und dessen Eingang definiert wird als der Ausgang $V_{cm}$ des beschriebenen zweiten Reglers, dessen Ausgang die Kreisfrequenz der Rotorflüsse $\omega_{s1}$, steuert.

3. Regler gemäß einem der Ansprüche 1 und 2, bei dem der genannte Regelkreis für den Fluss durch die folgende Gleichung definiert wird:

$$i^*_{sd} = \frac{1}{x_m} \frac{\Phi^{2*}_r}{sat(\Phi_{rd})}$$

in der die Funktion sat $(\Phi_{rd})$ eine nicht lineare Begrenzungsfunktion ist, die durch das folgende Gleichungssystem definiert wird:

$$sat(\Phi_{rd}) = \begin{cases} \Phi_{rd} & si \ \Phi_{rd} > \Phi_{rd \ min} \\ \Phi_{rd \ min} & si \ \Phi_{rd} \le \Phi_{rd \ min} \end{cases}$$

wobei

$$\Phi_{rd\,min} = \frac{1}{x_m} \frac{\Phi^2_{rN}}{I_{s\,max}}$$

wobei

$\Phi^2_{rN}$ der Nenn-Rotorfluss ist,

$I_{s\,max}$ der maximal zulässige Fluss im Wechselrichter und/oder der Asynchronmaschine ist.

**4.** Regler gemäß einem der Ansprüche 1 und 2, bei dem der genannte Regelkreis für den Fluss durch die folgende Gleichung definiert wird:

$$i^*_{sd} = \frac{1}{x_m(\Phi^{2*}_r, i_{mr})} \frac{\Phi^{2*}_r}{sat(\Phi_{rd})}$$

in der:

i_{mr} die Schätzung des magnetisierenden Flusses ist, und

$x_m (\Phi^{2*}_r, i_{mr})$ eine Funktion ist, die sich aus der Identifizierung der statischen Eigenschaft der Magnetisierung ergibt.

**5.** Regler gemäß einem der Ansprüche 1 bis 4, bei dem der Ausgang des ersten und zweiten Reglers der Differenz zwischen einer proportionalen Wirkung und einer integralen Wirkung entspricht, wobei sich die genannte integrale Wirkung aus der durch einen Verstärkungsfaktor $k_i$ bzw. $k_{ic}$ gewichteten Differenz zwischen dem Einstellwert $\Phi^{2*}_r$ bzw. $C^*_m$ und der Schätzung des Flusses $\Phi^2_m$ bzw. der Schätzung des Moments $C_m$ ergibt, und sich die genannte proportionale Wirkung aus der durch einen Verstärkungsfaktor $k_p$ bzw. $k_{pc}$ gewichteten Schätzung des Flusses $\Phi^2_r$ bzw. der Schätzung des Moments $C_m$ ergibt.

**6.** Vorrichtung zur Regelung des elektromagnetischen Moments einer Asynchronmaschine durch Regelung des magnetischen Flusses $\Phi$ und durch Regelung des elektromagnetischen Moments $C_m$, wobei die genannte Vorrichtung aus Regeleinrichtungen besteht, die mit einer Stromquelle und einem Regler $K_{ext}$ verbunden sind, wobei die genannte Vorrichtung **dadurch gekennzeichnet** wird, dass sie durch einen der vorgenannten Ansprüche definiert wird.

**7.** Vorrichtung gemäß Anspruch 6, bei der die genannte Asynchronmaschine mit Hilfe einer Spannungsversorgung geregelt wird und die genannte Spannungsversorgung durch einen dritten Regler $K_{int}$ in Schleife geschaltet ist, der in Kaskade mit dem genannten Regler $K_{ext}$ angeordnet ist.

**8.** Verfahren zur Regelung des elektromagnetischen Moments einer Asynchronmaschine durch Regelung des magnetischen Flusses $\Phi$ und durch Regelung des elektromagnetischen Moments $C_m$, mit Hilfe einer Vorrichtung, bestehend aus Regeleinrichtungen, die mit einer Stromquelle und einem Regler $K_{ext}$ verbunden sind, der durch einen der vorgenannten Ansprüche definiert wird, wobei das genannte Verfahren **dadurch gekennzeichnet** wird, dass es die folgenden Schritte beinhaltet, bestehend aus:

- Durchführung der Regelung des magnetischen Rotorflusses $\Phi_r$ mit Hilfe eines Regelkreises mit nicht linearer Regelung, der die Eingangs-Ausgangs-Linearisierung durch statische Rückführung nutzt,
- Durchführung einer integralen, und anschließend proportionalen Wirkung, um die Variable v des Eingangs des genannten Regelkreises zu erhalten, und
- Durchführung einer integralen, und anschließend proportionalen Wirkung, um die Kreisfrequenz der Rotorströme $\omega_{s1}$ zu steuern.

**9.** Verfahren gemäß Anspruch 8, bestehend aus einem zusätzlichen Schritt, der darin besteht, die genannte integrale, und anschließend proportionale Wirkung zu ergänzen, um die genannte Kreisfrequenz der Rotorströme $\omega_{s1}$ durch ein linearisierendes Regelprinzip zu ergänzen, um auf diese Weise die Schwankungen des Arbeitspunkts der genannten Asynchronmaschine zu beseitigen.

**10.** Verfahren gemäß einem der Ansprüche 8 und 9, das einen Schritt enthält, der darin besteht, einen Höchstwert für den Strom beim Anfahren oder beim Betrieb ohne Fluss der genannten Asynchronmaschine festzulegen.

**11.** Verfahren gemäß einem der Ansprüche 8 und 9, das einen Schritt enthält, der darin besteht, die gegenseitige statische Reaktanz $x_m$ so anzupassen, dass ihre Schwankung beim Betrieb der genannten Asynchronmaschine ohne Fluss beseitigt wird.

**Claims**

**1.** A corrector for controlling the electromagnetic torque of an asynchronous machine by regulating the magnetic flux $\phi$ and by controlling the electromagnetic torque $C_m$, the corrector being **characterized by**:

- a regulator circuit (3) for regulating the rotor magnetic flux $\phi_r$ having non-linear control using input/output linearization by static looping, defined by the equation:

$$i_{sd}^* = \frac{1}{x_m} \frac{\phi_r^{2*}}{\phi_{rd}}$$

in which:

$i_{sd}^*$ is the stator current reference value on the d-axis;
$\phi_r^{2*}$ is the reference value for the modulus of the rotor flux;
$\phi_{rd}$ is the d-component of the rotor flux;
$x_m$ is the [magnetizing or] mutual inductance; and

in which the output controlled the d-component of the stator current $i_s^*$;
- a first linear corrector (1) of the proportional, integral type whose output $\underline{v}$ is the input of said regulator circuit; and
- a second linear corrector (2) of the proportional, integral type whose output controls the angular frequency of the rotor currents $\omega_{s1}$.

**2.** A corrector according to claim 1, in which said second corrector further includes a non-linearizing control circuit (4) defined by the equation:

$$\omega_{s1} = \left\{ \frac{A_c^*}{B_c} \left[ \frac{1}{\theta} \right] - \frac{A_c}{B_c} \right\} C_m + \frac{B_c^*}{B_c} \left[ \frac{1}{\theta} \right] v_{cm}$$

$$\theta = \frac{\phi_r^{2*}}{\phi_{rd}^2}, \quad A_c^* = -\frac{1}{\tau_r}, \quad B_c^* = \frac{1}{\tau_r}$$

with

$$A_c = -\frac{1}{\tau_r}, \quad B_c = \frac{\omega_{SN}\phi_r^{2*}}{\tau_r}$$

in which:

$\theta$ is the parameter characterizing the operating point in torque;
$v_{cm}$ is the input of said corrector;
$\tau_r$ is the rotor time constant;
$\omega_{SN}$ is the nominal stator angular frequency;
$x_r$ is the rotor reactance; and

the input thereof is defined by the output $v_{cm}$ of said second corrector and its output controls the angular frequency of the rotor currents $\omega_{s1}$.

3. A corrector according to claim 1 or 2, in which said flux regulator circuit is defined by the equation:

$$i_{sd}^{*} = \frac{1}{x_m} \frac{\hat{\phi}_{r}^{2*}}{sat(\hat{\phi}_{rd})}$$

in which the function sat $(\hat{\phi}_{rd})$ is a non-linear limiting function defined by the following system of equations:

$$sat(\hat{\phi}_{rd}) = \begin{cases} \hat{\phi}_{rd} & \text{if } \hat{\phi}_{rd} > \phi_{rdmin} \\ \phi_{rdmin} & \text{if } \hat{\phi}_{rd} \leq \phi_{rdmin} \end{cases}$$

with

$$\Phi_{rdmin} = \frac{1}{x_m} \frac{\Phi_{rN}^{2}}{I_{smax}}$$

in which:

$\phi_{rN}^{2}$ is the nominal rotor flux;
$I_{smax}$ is the maximum current that can be accepted by the converter and/or the asynchronous machine.

4. A corrector according to claim 1 or 2, in which the flux regulator circuit is defined by the equation:

$$i_{sd}^{*} = \frac{1}{x_m(\phi_r^{2*}, \hat{i}_{mr})} \frac{\phi_r^{2*}}{sat(\phi_{rd})}$$

in which:

$\hat{i}_{mr}$ is the estimate of the magnetizing current; and
$x_m (\phi_r^{2*}, \hat{i}_{mr})$ is a function that results from identification of the static characteristic of magnetization.

5. A corrector according to any one of claims 1 to 4, in which the output of each of the first and second correctors is the difference between a proportional action and an integral action, said integral action being the result of taking the difference between the reference $\phi_r^{2*}$ and the estimated flux $\hat{\phi}_r^2$ and weighting it by a gain $k_i$ or taking the difference between the reference $C_m^*$ and the estimated torque $\hat{C}_m$ and weighting it by a gain $k_{ic}$, and said proportional action being the result of weighting the estimated flux $\hat{\phi}_r^2$ by a gain $k_p$ or weighting the estimated torque $\hat{C}_m$ by a gain $k_{pc}$.

6. Apparatus for controlling the electromagnetic torque of an asynchronous machine by regulating the magnetic flux $\phi$ and by controlling the electromagnetic torque $C_m$, said apparatus being constituted by control means associated with a power source and a corrector $K_{ext}$, is defined by any preceding claim.

7. Apparatus according to claim 6, in which said asynchronous machine is controlled by a voltage power supply, with said voltage power supply being current looped by a third corrector $K_{int}$ disposed in cascade with said corrector $K_{ext}$.

8. A method of controlling the electromagnetic torque of an asynchronous machine by regulating the magnetic flux $\phi$ and by controlling the electromagnetic torque $C_m$, the method using apparatus constituted by control means associated with a power source and with a corrector $K_{ext}$ defined by any preceding claim, said method being **characterized in that** it comprises the steps consisting in:

- regulating the rotor magnetic flux $\phi_r$ by means of a non-linearly controlled regulator circuit using input/output linearization by means of a static loop;

- performing integral action and then proportional action so as to obtain the input variable $\underline{v}$ of said regulator circuit; and
- performing integral action and then proportional action so as to control the angular frequency of the rotor currents $\omega_{s1}$.

9. A method according to claim 8, including an additional step consisting in completing said integral then proportional action for controlling said angular frequency of the rotor currents $\omega_{s1}$ by a linearizing control relationship in such a manner as to be unaffected by variations in the operating point of said asynchronous machine.

10. A method according to claim 8 or 9, including a step consisting in fixing a maximum current value while starting said asynchronous machine or while operating under defluxed conditions.

11. A method according to claim 8 or 9, including a step consisting in adapting the static mutual reactance $x_m$ in such a manner as to be unaffected by variation therein during operation of said asynchronous machine under defluxed conditions.

# FIG. 1

# FIG. 2

# FIG. 3

# FIG. 4